# EUROPÄISCHE PATENTANMELDUNG

(11) **EP 1 127 746 A2**
(43) Veröffentlichungstag der Anmeldung: **29.08.2001**
(21) Anmeldenummer: 01101341.4
(22) Anmeldetag: 22.01.2001
(51) Int. Cl.: B60R 11/02

(54) **Kommunikationssystem in einem Fahrzeug**

(30) Priorität: 24.02.2000 DE 10008715
(71) Anmelder: Bayerische Motoren Werke Aktiengesellschaft, 80809 München (DE)
(72) Erfinder: Steinberg, Karl-Ernst, 81249 München (DE); Vögel, Hans-Jörg, 82216 Gerlinden (DE); Kellerer, Wolfgang, 82256 Fürstenfeldbruck (DE)

(57) **Zusammenfassung**

Die Erfindung betrifft ein Kommunikationssystem in einem Fahrzeug umfassend eine Steuereinheit, wenigstens zwei mit der Steuereinheit verbundene drahtlose Kommunikationseinrichtungen und eine mit der Steuereinheit verbundene oder verbindbare Ein- und Ausgabeeinheit.

Um die Anforderungen für einen Benutzer möglichst optimal lösen und neuartige Dienste anbieten zu können, ist das Steuergerät (10) derart ausgebildet, daß es selbstständig die Wahl der Kommunikationseinrichtung übernimmt.

## Beschreibung

Die Erfindung betrifft ein Kommunikationssystem in einem Fahrzeug.

Bereits heute gibt es eine Vielzahl von mobilen Kommunikationsmöglichkeiten, insbesondere aus einem Fahrzeug heraus. Diese Kommunikationsvielfalt wird sich zukünftig noch erhöhen. Es werden eine Vielzahl von teilweise konkurrierenden und sich teilweise ergänzenden Systemen vorhanden sein. Die verschiedenen Systeme wiederum werden eine Vielzahl von Trägerdiensten anbieten, welche sich in ihren Eigenschaften zum Teil erheblich unterscheiden. Hinzu kommt, daß eine vollständig flächendeckende Versorgung bei einzelnen Systemen nicht immer gegeben ist. Es kann auch möglich sein, daß manche Systeme regional abhängig, in verschiedenen örtlichen Bereichen nicht betreibbar sind. Insgesamt wird die Mobilkommunikationslandschaft zukünftig also von großer Heterogenität gekennzeichnet sein. Gleichzeitig und unabhängig von dieser Heterogenität wird jeder Benutzer jedoch personalisierte Teledienste nutzen wollen.

Für einen Kommunikationsteilnehmer ergeben sich dabei folgende Probleme. Er muß für seine jeweilige Applikation aus mehreren konkurrierenden oder komplementären Mobilfunksystemen eines auswählen und den passenden Trägerdienst belegen (z.B. e-mail über GSM, Trägerdienst SMS oder 4.6 kbit/s Datenträgerdienst mit PPP-Verbindung). Ferner müssen die persönlichen Standarddienste über momentan verfügbare Kommunikations- und Trägerdienste abgebildet werden. Schließlich muß auch eine einfache Bedienung trotz hochkomplexer, vielfältiger Kommunikationsumgebungen gewährleistet werden. Um diese Aufgaben zu realisieren, existieren in manchen Mobilfunksystemen bereits heute verschiedene Lösungsansätze, beispielsweise Multimode-Geräte.

Aufgabe der vorliegenden Erfindung ist es, eine systemübergreifende Konvergenz von Telekommunikationsdiensten zu realisieren.

Diese Aufgabe wird durch die in Anspruch 1 genannten Merkmale gelöst. Demgemäß sind wenigstens zwei drahtlose Kommunikationseinrichtungen mit einer Steuereinheit verbunden, welche die Wahl der Kommunikationseinrichtung je nach Applikation und Verfügbarkeit selbständig übernimmt. Damit erlaubt das erfindungsgemäße Kommunikationssystem seinem Benutzer eine einfache Nutzung von verschiedenen Telediensten ohne die Eigenheiten und Konfiguration der einzelnen verwendeten Kommunikationseinrichtungen oder -module kennen zu müssen. Es wird darüber hinaus eine maximal mögliche Dienstqualität durch eine adaptive Auswahl momentan geeigneter Übertragungssysteme erreicht.

Vorzugsweise ist zwischen der Steuereinheit und den Kommunikationseinrichtungen eine einheitliche Schnittstelle vorgesehen. Insbesondere kann diese Schnittstelle offen ausgebildet sein. Das Steuergerät fungiert dabei als zentrales Bindeglied in der heterogenen Kommunikationsumgebung. Insbesondere besitzt die Steuereinheit eine einheitliche Schnittstelle zu den unterschiedlichen Kommunikationseinrichtungen, welche den physikalischen Zugang zu den gewünschten Mobilfunksystemen und anderen Systemen (z.B. Broadcastsysteme) gestatten. Durch die einheitliche, insbesondere offen ausgebildete Schnittstelle ist ein leichtes Hinzufügen von weiteren Modulen möglich, ohne das gesamte System verändern zu müssen. Insbesondere können weitere Kommunikationsmodule in ähnlicher Weise hinzugefügt werden, wie dies heutzutage mit Einsteckkarten bei einem Personalcomputer (PC) möglich ist.

Gemäß einer weiteren Ausführungsform der Erfindung ist eine Konvergenzschicht zwischen der einheitlichen Schnittstelle und den Kommunikationseinrichtungen vorgesehen. Diese Konvergenzschicht bildet die Eigenheiten des jeweiligen Dienstzuganges auf einen einheitlichen Mechanismus ab.

Als Kommunikationseinrichtungen bzw. -einheiten können ein GSM-Modul (GSM = Global System for mobile communication), ein DAB-Modul (DAB = Digital Audio Broadcast), ein DVB-Modul (DVB = Digital Video Broadcast), ein UMTS-Modul (UMTS = Universal Mobile Telecommunication System), ein WATM-Modul (WATM = Wireless ATM), ein GPRS-Modul (GPRS = General Packet Radio Service) oder ein dergleichen Kommunikationsmodul verwendet werden. Natürlich ist es auch möglich, zukünftig entwickelte Kommunikationsmodule zu verwenden und dem System hinzuzufügen.

Für jede Kommunikationseinrichtung sollte in der Konvergenzschicht ein spezielles Modul, beispielsweise in Form einer Einsteckkarte oder spezieller Treibersoftware, geschaffen werden, welche eine Schnittstelle zwischen der Steuereinheit und der jeweiligen Kommunikationseinrichtung herstellt.

Gemäß einer weiteren bevorzugten Ausführungsform der Erfindung ist zwischen der Steuereinheit und der Ein- und Ausgabeeinheit eine zweite einheitliche Schnittstelle, insbesondere eine offene Schnittstelle, ausgebildet. Durch diese Maßnahme wird es dem Bediener ermöglicht, ein eigenes für ihn gewohntes System oder Gerät, beispielsweise einen Hand-PC oder einen sonstigen tragbaren Daten-Assistenten, als Ein- und Ausgabeeinheit an die Steuereinheit anzuschließen. Denkbar wäre beispielsweise eine IP-Schnittstelle basierend auf einer "Bluetooth-Technologie". Es ist jedoch nicht der Einsatz einer bestimmten Technologie zur Realisierung notwendig. Vielmehr ist entscheidend, ob überhaupt eine offene Schnittstelle gewählt wird, um die Nutzung von verschiedenen Telediensten durch beliebige, vorhandene, möglicherweise selbständig betreibbare Funktionseinheiten zu ermöglichen.

Durch das vorliegende Kommunikationssystem wird die Anforderung eines Bedieners auf verfügbare Trägerdienste des vorhandenen Kommunikationssystems abgebildet. Gemäß einer bevorzugten Ausführungsform der Erfindung ist in der Steuereinheit ein Vermittlungsmodul vorgesehen, welches die Datenübermittlung und Verbindungswege auswählt, überwacht, koordiniert und steuert. Dies ist insbesondere dann notwendig, wenn mehrere Kommunikationsmodule gleichzeitig genutzt werden oder wenn mehrere Benutzer sich gleichzeitig der Steuereinheit bedienen. Diese Maßnahme führt daher zur Vermeidung von Daten- und Protokollkonflikten und zur Priorisierung von verschiedenen Verbindungen oder Informationen.

Um neue Applikationsmöglichkeiten generieren zu können, ist gemäß einer weiteren Ausführungsform eine Speichereinrichtung in der Steuereinheit vorgesehen, in der Anwendungen ablegbar sind.

Gemäß einer Ausführungsform der Erfindung kann das Kommunikationssystem, insbesondere die Steuereinheit, auch tätig werden, ohne daß ein Bediener über die Ein- und Ausgabeeinheit selbst Kommunikationsbefehle eingibt. Eine Kommunikation kann also auch von außen angestoßen und durchgeführt werden, ohne daß der Benutzer dies veranlaßt oder gar darüber informiert wird. Die Organisation dieser Kommunikation über die verschiedenen internen Verbindungen wird dann von der Steuereinheit selbst übernommen. Diese Ausführungsform kann dadurch noch erweitert werden, daß die Steuereinheit mit wenigstens einem anderen Steuergerät oder mit wenigstens einer weiteren Informationseinheit aus dem Fahrzeug verbunden ist und mit diesem bzw. dieser in Verbindung tritt.

Gemäß einer bevorzugten Ausführungsform der Erfindung kann die Informations-und Datenverfügbarkeit noch erhöht werden. Dazu ist ein Zwischenspeicher im Steuergerät vorgesehen. In diesem Zwischenspeicher werden Informationen, die beispielsweise unidirektional über Weitverkehrsinfrastruktur, also Verteilnetze, übertragen werden, zwischengespeichert. Beispielsweise gibt es die Möglichkeit zur breitbandigen Übermittlung von beliebigen digitalen Informationen über bestehende Verteilnetze, z.B. Rundfunk-Verteilnetze. Ein konfigurierbarer Satz von Multimedia-Informationseinheiten, wie Webseiten, digitale Audio- und Videoclips, personalisierte Elektronische Zeitung oder regionale Informationssysteme, können dabei genutzt werden. Durch eine Push-Steuerung ist eine periodische Aktualisierung über solche Verteilernetze möglich. Hierbei empfängt das vorliegend beschriebene Kommunikationssystem die Informationen über eine entsprechende Kommunikationseinrichtung, beispielsweise DAB oder DVB. Diese Information wird dann in dem Zwischenspeicher abgelegt. Durch inhärente Eigenschaften der Verteilnetze können die Daten in dem Zwischenspeicher auch ohne Anforderungen durch Endteilnehmer auf einen aktuellen Stand gehalten werden. Die dort gespeicherten Informationen sind dann schnell und verzögerungsfrei verfügbar. Sollten gewünschte Informationen nicht vorhanden sein, so ist über ein bidirektionales Kommunikationsmodul oder eine solche Einrichtung ein Verbindungsaufbau möglich, um auf Anfrage gewünschte Daten bidirektional übertragen zu können oder eine entsprechende Übertragung bidirektional anstoßen zu können.

Die bidirektionalen Kommunikationsmodule stehen im vorliegenden Kommunikationssystem auch für das Etablieren von normalen Kommunikationsbeziehungen zur Verfügung. Um eine Kollision bei verschiedenen Zugriffen auf die Kommunikationsmodule zu vermeiden, wird die Vermittlungseinheit aktiv, welche zum einen die Verbindungssignale umsetzt und die vom Benutzer gewünschte Dienstgüte abbildet. Auf diese Weise können mehrere Kommunikationsmodule genutzt werden. Darüber hinaus können auch mehrere Benutzer gleichzeitig auf die gleiche Steuereinheit zugreifen. Die Vermittlungsfunktion kann dabei paket- als auch verbindungsorientiert gewählt bzw. auf geeignete Transportfunktionen der Kommunikationsmodule abgebildet werden (beispielsweise Paketvermittlung über einen GPRS-Dienst).

Die vorliegende Erfindung wird nachfolgend anhand eines Ausführungsbeispiels und mit Bezug auf die einzige beiliegende Zeichnung näher erläutert.

Die einzige beiliegende Zeichnung zeigt eine schematische Blockdarstellung eines erfindungsgemäßen Kommunikationssystems. Als zentrale Einheit dient die Steuereinheit 10, welche sämtliche Steuer-, Speicher- und Vermittlungsfunktionen erfüllt.

Die Steuereinheit 10 besitzt vorliegend eine standardisierte, offene Schnittstelle 12 in Form von Steckplätzen, an die die verschiedenen Kommunikationseinrichtungen anschließbar bzw. einsteckbar sind. Alternativ ist auch eine ausschließliche Softwarerealisierung denkbar. Die jeweiligen Kommunikationseinrichtungen bestehen vorliegend jeweils aus einem Modul in einer Konvergenzschicht zwischen der Steuereinheit 10 und den Kommunikationsgeräten selbst und werden im folgenden als GSM-SKM 14a, DAB-SKM 14b, DVB-SKM, UMTS-SKM und WATM-SKM bezeichnet, wobei SKM jeweils für systemspezifisches Konvergenzmodul steht.

Zwischen dem jeweiligen SKM 14a bis 14e und den zugehörigen Kommunikationsgeräten sind noch entsprechende Schnittstellen 16a bis 16e angeordnet, welche die jeweilige Konvergenzschicht mit den zugeordneten eigentlichen Kommunikationsgeräten verbinden. Als Kommunikationsgeräte sind vorliegend ein GSM-Gerät, ein DAB-Gerät, ein DVB (-T)-Gerät, ein UMTS-Gerät und ein WATM-Gerät vorgesehen.

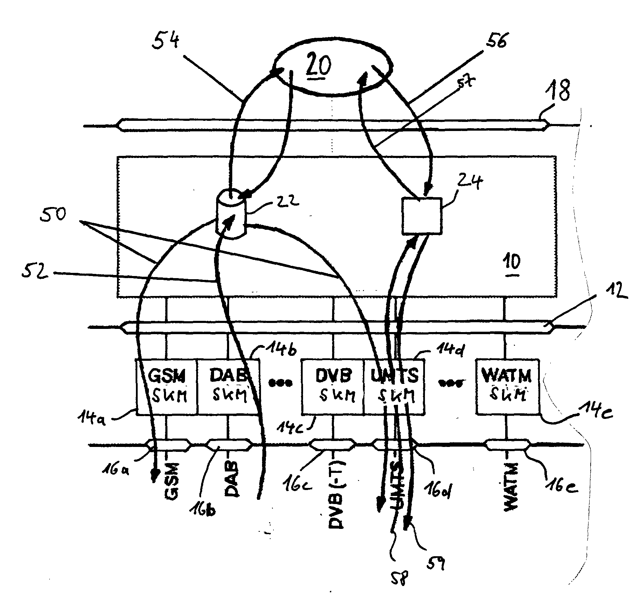

Wie in der einzigen Figur ersichtlich ist, kann durch die offene Struktur des der Steuereinheit nachgeschalteten Systems eine beliebig erweiterbare Gerätearchitektur erstellt werden. Beispielsweise ist es möglich, nur ein, zwei oder eine Vielzahl von herkömmlichen oder auch zukünftigen Geräten an diese standardisierte Schnittstelle 12 anzuschließen. Die eigentliche Kommunikation mit der Umgebung findet dann jeweils über die oben beschriebenen Kommunikationsgeräte statt.

Die Steuereinheit 10 ist auf der anderen Seite mit einer Ein- und Ausgabeeinheit 20 verbunden und zwar vorliegend wiederum über eine standardisierte, offene Schnittstelle 18. An diese Schnittstelle 18 können vom Bediener gewünschte mobile Rechner angeschlossen werden, so daß für jeden Benutzer immer eine vertraute Ein-und Ausgabeeinheit vorliegt.

Bei den Ein- und Ausgabeeinheiten kann es sich um bereits im Fahrzeug vorhandene Geräte, aber auch um funktional selbständige, mobile Geräte handeln.

Wird nun vom Benutzer eine bestimmte Applikation gewünscht, so gibt er dies über die Ein- und Ausgabeeinheit 20 ein, von der der Wunsch an die Steuereinheit 10 übermittelt wird. Die Steuereinheit 10 wählt aufgrund der ihr bekannten Architektur und Systemgegebenheiten für eine maximal mögliche Dienstqualität die optimale Kommunikationseinrichtung aus und stellt eine Verbindung her. Alternativ können auch andere Kriterien (z.B. kostengünstigste Verbindung, schnellste Verbindung, sicherste Verbindung) bei Auswahl einer Kommunikationseinrichtung berücksichtigt werden. Eine solche Kommunikation ist in der Figur durch die Pfeile 56 bis 59 skizziert. Von der Ein- und Ausgabeeinheit 20 erfolgt zunächst eine Anforderung an die Steuereinheit 10. Eine Untereinheit der Steuereinheit 10, vorliegend ein Vermittlungsmodul 24, steuert eine möglicherweise parallele Nutzung sowohl der Steuereinheit 10 selbst als auch der daran angeschlossenen Kommunikationsgeräte. Über die Vermittlungseinheit 24 und das Steuergerät 10 erfolgt dabei die Wahl der Kommunikationseinrichtung selbständig. Im vorliegenden Fall wird eine bidirektionale Verbindung über die UMTS-Einheit hergestellt. Diese Verbindung ist über die Pfeile 58 und 59 gekennzeichnet. Der Benutzer sieht oder hört dabei nur das Resultat der Verbindung (Pfeil 57). Die im Hintergrund ablaufende Auswahl und Organisation ist für ihn nicht sichtbar.

Eine andere Anwendungsweise der vorliegenden Erfindung kann in der kontinuierlichen Übermittlung von Daten über ein an sich bekanntes Funkverteilnetz gesehen werden. Diese Informationen werden in einem Zwischenspeicher 22 der Steuereinheit 10 abgelegt und je nach Wunsch des Bedieners über die Ein- und Ausgabeeinrichtung 20 abgerufen. Stellt der Bediener fest, daß eine bestimmte Information nicht vorhanden ist, so kann er sie durch den Aufbau einer bidirektionalen Verbindung, beispielsweise über die Module GSM oder UMTS, anfordern. Die Entscheidung, über welches Kommunikationsmodul der Verbindungsaufbau erfolgt, wird vom Steuergerät selbst getroffen. Über die bidirektionale Verbindung kann nun das Funkverteilnetz zur Übertragung der gewünschten Information angestoßen werden. Diese Information wird dann übermittelt. Eine solche Übermittlung kann auch automatisch veranlaßt werden, also ohne ein Zutun des Bedieners selbst. Beispielsweise ist es möglich, daß beim Betreten eines Fahrzeugs das persönliche Profil eines Bedieners hinterlegt und der Steuereinheit dieses Profil mitgeteilt wird. Die Steuereinheit kann daraufhin die Ein- und Ausgabeeinheit sowie die Struktur des Kommunikationssystems so festlegen, daß es auf das persönliche Profil abgestimmt ist. Unter anderem können auch automatisch spezielle Daten angefordert werden, die gemäß dem persönlichen Profils vom Bediener gewünscht werden. Darüber hinaus ist es auch möglich, die Berechtigungen und die Logik der Steuereinheit in Abhängigkeit von einem bestimmten Profil, insbesondere einem persönlichen Profil, auszuwählen.

Eine Bereitstellung von Daten oder Informationen kann auch adaptiv erfolgen. Stellt das Steuergerät 10 beispielsweise fest, daß bei einem bestimmten Benutzer immer wieder ähnliche Informationen abgefragt werden, so kann es die Abfrageprozedur bereits dann veranlassen, wenn die Nutzung des Fahrzeugs durch den bestimmten Benutzer erkannt wird oder ein bestimmtes, vorher festgelegtes Ereignis eintritt. Die Einholung der Informationen und Daten wird dann automatisch veranlaßt. Im Zwischenspeicher 22 werden diese Daten bereitgestellt. Sobald der Benutzer in gewöhnlicher Weise diese Daten zur Verfügung bekommen will, kann dies ohne Zeitverzögerung geschehen.

Das persönliche Profil kann beispielsweise von einem lokalen Rechner, einer separaten, dem Steuergerät zuzuführenden Speichereinheit oder einer Speichereinheit im Fahrzeug selbst ausgelesen werden.

Insgesamt ist mit der vorliegenden Erfindung die Möglichkeit geschaffen, ein Kommunikationssystem bereitzustellen, welches einem Benutzer die Nutzung eine Vielzahl von heterogenen Übertragungssystemen bereitstellt, ohne daß er dies selbst wissen muß. Der Benutzer selbst braucht nur die Anforderungen eingeben. Die Verwaltung und Steuerung des Systems wird von der Steuereinheit durchgeführt. Ein wesentlicher Gedanke dabei ist die adaptive und verfügbarkeitsgesteuerte Auswahl momentan geeigneter und vorhandener Übertragungssysteme für eine Befriedigung einer Anforderung durch den Benutzer.

## Patentansprüche

1. Kommunikationssystem in einem Fahrzeug umfassend
eine Steuereinheit (10),
wenigstens zwei mit der Steuereinheit (10) verbundene drahtlose Kommunikationseinrichtungen und
eine mit der Steuereinheit (10) verbundene oder verbindbare Ein- und Ausgabeeinheit (20),
wobei das Steuergerät (10) derart ausgebildet ist, daß es selbstständig die Wahl der Kommunikationseinrichtung übernimmt.

2. Kommunikationssystem nach Anspruch 1,
dadurch gekennzeichnet,
daß zwischen der Steuereinheit und den Kommunikationseinrichtungen eine einheitliche Schnittstelle (12) vorgesehen ist.

3. Kommunikationssystem nach Anspruch 2,
dadurch gekennzeichnet,
daß die Schnittstelle (12) offen ausgebildet ist.

4. Kommunikationssystem nach einem der Ansprüche 2 oder 3,
dadurch gekennzeichnet,
daß eine Konvergenzschicht (14a - 14e) zwischen der einheitlichen Schnittstelle (12) und den Kommunikationseinrichtungen vorgesehen ist.

5. Kommunikationssystem nach einem der vorhergehenden Ansprüche,
dadurch gekennzeichnet,
daß als Kommunikationseinrichtungen ein GSM-Modul, ein DAB-Modul, ein DVB-Modul, ein UMTS-Modul, ein WATM-Modul, ein GPRS-Modul oder ein dergleichen Modul verwendet wird.

6. Kommunikationssystem nach einem der vorhergehenden Ansprüche,
dadurch gekennzeichnet,
daß zwischen der Steuereinheit (10) und der Ein- und Ausgabeeinheit (20) eine zweite einheitliche Schnittstelle (18) vorgesehen ist.

7. Kommunikationssystem nach Anspruch 6,
dadurch gekennzeichnet,
daß die zweite Schnittstelle (18) offen ausgebildet ist.

8. Kommunikationssystem nach einem der vorhergehenden Ansprüche,
dadurch gekennzeichnet,
daß als Ein- und Ausgabeeinheit (20) eine tragbare selbständig betreibbare Funktionseinheit an die Steuereinheit (10) anschließbar ist.

9. Kommunikationssystem nach einem der vorhergehenden Ansprüche,
dadurch gekennzeichnet,
daß als Ein- und Ausgabeeinheit (20) ein tragbarer Rechner, ein Hand-PC, oder ein dergleichen Gerät an die Steuereinheit (10) anschließbar ist.

10. Kommunikationssystem nach einem der vorhergehenden Ansprüche,
dadurch gekennzeichnet,
daß in der Steuereinheit (10) ein Zwischenspeicher (22) zur Speicherung von eingehenden Daten vorgesehen ist.

11. Kommunikationssystem nach einem der vorhergehenden Ansprüche,
dadurch gekennzeichnet,
daß in der Steuereinheit (10) ein Vermittlungsmodul (24) vorgesehen ist, welches die Datenübermittlung und die Verbindungswege koordiniert, überwacht und steuert.

12. Kommunikationssystem nach einem der vorhergehenden Ansprüche,
dadurch gekennzeichnet,
daß im Steuergerät (10) eine Speichereinrichtung vorgesehen ist, in der Anwendungen und/oder Daten ablegbar sind.

13. Kommunikationssystem nach einem der vorhergehenden Ansprüche,
dadurch gekennzeichnet,
daß das Steuergerät (10) dazu ausgebildet ist, um ein benutzerdefiniertes Profil einzulesen und das System entsprechend einzustellen.

14. Kommunikationssystem nach einem der vorhergehenden Ansprüche,
dadurch gekennzeichnet,
daß das benutzerdefinierte Profil über die als selbständige Funktionseinheit betreibbare Ein- und Ausgabeeinheit (20) einlesbar ist.

15. Kommunikationssystem nach einem der vorhergehenden Ansprüche,
dadurch gekennzeichnet,
daß das auf einem Speichermedium abgelegte benutzerdefinierte Profil in das System einlesbar ist.

16. Kommunikationssystem nach einem der vorhergehenden Ansprüche,
dadurch gekennzeichnet,
daß die Steuereinheit (10) mit wenigstens einem anderen Steuergerät oder mit wenigstens einer Informationseinheit aus dem Fahrzeug verbunden ist.
